# EUROPEAN PATENT APPLICATION

(11) **EP 4 722 267 A1**
(43) Date of publication of application: **08.04.2026**
(21) Application number: 24815345.4
(22) Date of filing: 23.05.2024
(51) Int. Cl.: C08F 299/08, C08F 290/06, C08K 3/013, C08K 5/5419, C08L 83/05, C08L 83/07, C09K 5/14

(54) **THERMAL RADICAL-CURABLE THERMALLY CONDUCTIVE SILICONE COMPOSITION AND METHOD FOR PRODUCING SAME**

(30) Priority: 31.05.2023 JP 2023089752
(71) Applicant: SHIN-ETSU CHEMICAL CO., LTD., Tokyo 100-0005 (JP)
(72) Inventor: TOYA Wataru, Annaka-shi, Gunma 379-0224 (JP); YAMAGUCHI Takahiro, Annaka-shi, Gunma 379-0224 (JP)
(74) Representative: Schicker, Silvia
(86) International application number: PCT/JP2024/018925
(87) International publication number: WO 2024/247861

(57) **Abstract**

The present invention is a thermal radical curable thermoconductive silicone composition including: an addition reaction product of the following component (A) and component (B); (C) a thermoconductive filler having a thermal conductivity of 10 W/m·K or more in an amount of 20 to 95% by mass based on a total amount of the composition; (D) a platinum group metal catalyst; and (E) an organic peroxide in an amount of 1 to 10 parts by mass based on 100 parts by mass of the component (A), wherein the component (A) is an organopolysiloxane having a kinematic viscosity at 25°C of 10 to 100,000 mm²/s and containing one or more aliphatic unsaturated groups per molecule, the component (B) is a polyorganohydrogensiloxane having one or more silicon atom-bonded hydrogen atoms in one molecule, and having at least one group of an acrylate group and a methacrylate group, and the number of the silicon atom-bonded hydrogen atoms in the component (B) divided by the number of the aliphatic unsaturated groups in the component (A) is 0.1 to 3.0. According to the present invention, a highly thermoconductive silicone composition with excellent curability through low-temperature and short-time heating is provided.

## Description

### TECHNICAL FIELD

The present invention relates to a thermal radical curable thermoconductive silicone composition that exhibits excellent curability and a method for producing the same.

### BACKGROUND ART

Semiconductor devices are widely known for generating heat during use and the resulting performance degradation. To address this issue, various heat dissipation technologies have been employed. Generally, heat dissipation is performed by placing a cooling member (such as a heat sink) near the heat-generating part, and efficiently removing heat through the cooling member after bringing them into close contact. When there is a gap between the heat-generating member and the cooling member in that case, the intervention of air, which is poorly thermoconductive, reduces the thermal conductivity, preventing the temperature of the heat-generating member from sufficiently decreasing. To prevent such phenomena, heat-dissipation materials with good thermal conductivity and conformability to the surface of the member, such as heat-dissipation grease and heat-dissipation sheets, are used. In addition, heat-dissipation grease that cures into an elastomer material upon heating is widely known, and widely used because it achieves both low thermal resistance and low stress. On the other hand, in recent years, due to the increase in the number of semiconductors, the takt time required for curing can no longer be ignored. In Patent Document 1, high heat dissipation and strong adhesion are achieved by using a platinum catalyst in combination with a peroxide, but the examples show that a long heating and curing time at high-temperature of 60 minutes at 150°C is required, which is not sufficient.

### CITATION LIST

### PATENT LITERATURE

Patent Document 1: WO 2019/138991 A1

### SUMMARY OF INVENTION

### TECHNICAL PROBLEM

Conventional silicone compositions have the problem of requiring long heating and curing times at high temperatures.

The present invention has been made to solve the above-mentioned problems, and an object of the present invention is to provide a highly thermoconductive silicone composition with excellent curability through low-temperature and short-time heating and a method for producing the same.

### SOLUTION TO PROBLEM

To solve the problem described above, the present invention provides a thermal radical curable thermoconductive silicone composition comprising: an addition reaction product of the following component (A) and component (B); (C) a thermoconductive filler having a thermal conductivity of 10 W/m·K or more in an amount of 20 to 95% by mass based on a total amount of the composition; (D) a platinum group metal catalyst; and (E) an organic peroxide in an amount of 1 to 10 parts by mass based on 100 parts by mass of the component (A), wherein
the component (A) is an organopolysiloxane having a kinematic viscosity at 25°C of 10 to 100,000 mm²/s and containing one or more aliphatic unsaturated groups per molecule,
the component (B) is a polyorganohydrogensiloxane having one or more silicon atom-bonded hydrogen atoms in one molecule, and having at least one group of an acrylate group and a methacrylate group, and
the number of the silicon atom-bonded hydrogen atoms in the component (B) divided by the number of the aliphatic unsaturated groups in the component (A) is 0.1 to 3.0.

This thermal radical curable thermoconductive silicone composition can be cured through low-temperature and short-time heating.

The thermal radical curable thermoconductive silicone composition can further comprise (F) an organic compound having one or more allyl groups.

With such a thermal radical curable thermoconductive silicone composition, the adhesive performance of the composition is further improved.

In addition, the thermal radical curable thermoconductive silicone composition can further comprise (G) an organic compound having a trialkoxysilyl group.

With such a thermal radical curable thermoconductive silicone composition, the adhesive performance of the composition is further improved.

The thermal radical curable thermoconductive silicone composition can further comprise (H) a condensation catalyst.

When the thermal radical curable thermoconductive silicone composition comprises such a condensation catalyst, curing by moisture can be promoted.

Then, the present invention can provide a method for producing the thermal radical curable thermoconductive silicone composition, the method comprising:
heating and mixing the component (A), the component (B), the component (C), and the component (D) at 100°C or higher for 30 minutes or more, followed by cooling; and then
adding the component (E).

With such a method for producing the thermal radical curable thermoconductive silicone composition, a thermal radical curable thermoconductive silicone composition that can be cured through low-temperature and short-time heating can be produced.

In this case, the present invention can provide the method for producing the thermal radical curable thermoconductive silicone composition, the method comprising:
heating and mixing the component (A), the component (B), the component (C), the component (D), and (G) an organic compound having a trialkoxysilyl group, and (I) a reaction control agent at 100°C or higher for 30 minutes or more, followed by cooling; and then
adding the component (E), and (F) an organic compound having one or more allyl groups, and (H) a condensation catalyst.

With such a method for producing a thermal radical curable thermoconductive silicone composition, it is possible to produce a thermal radical curable thermoconductive silicone composition that has superior adhesiveness and better curability, and can extend pot life during the production of the composition.

### ADVANTAGEOUS EFFECTS OF INVENTION

As described above, the thermal radical curable thermoconductive silicone composition of the present invention can achieve a silicone composition with high heat dissipation performance and wear resistance, as it has an appropriate thickness and thermal conductivity during actual use. Moreover, the present composition can be cured through low-temperature and short-time heating.

### DESCRIPTION OF EMBODIMENTS

As mentioned above, there has been a demand for the development of a highly thermoconductive silicone composition that can be cured through low-temperature and short-time heating.

The present inventors have intensively studied to solve the above problems, and have found that by combining a compound obtained by cross-linking an organopolysiloxane with a specific kinematic viscosity and an organohydrogensiloxane having a curable group through a hydrosilylation reaction, with a thermoconductive filler, it is possible to obtain a highly thermoconductive silicone composition with excellent curability, and achieved the present invention.

That is, the present invention is a thermal radical curable thermoconductive silicone composition (hereinafter sometimes simply referred to as silicone composition) including: an addition reaction product of the following component (A) and component (B); (C) a thermoconductive filler having a thermal conductivity of 10 W/m·K or more in an amount of 20 to 95% by mass based on a total amount of the composition; (D) a platinum group metal catalyst; and (E) an organic peroxide in an amount of 1 to 10 parts by mass based on 100 parts by mass of the component (A), wherein
the component (A) is an organopolysiloxane having a kinematic viscosity at 25°C of 10 to 100,000 mm²/s and containing one or more aliphatic unsaturated groups per molecule,
the component (B) is a polyorganohydrogensiloxane having one or more silicon atom-bonded hydrogen atoms in one molecule, and having at least one group of an acrylate group and a methacrylate group, and
the number of the silicon atom-bonded hydrogen atoms in the component (B) divided by the number of the aliphatic unsaturated groups in the component (A) is 0.1 to 3.0.

Hereinafter, the present invention will be described in detail, but the present invention is not limited to these.

### Component (A)

The component (A) is an organopolysiloxane having a kinematic viscosity at 25°C of 10 to 100,000 mm²/s, preferably 30 to 10,000 mm²/s, and containing one or more aliphatic unsaturated groups per molecule. When the kinematic viscosity of the organopolysiloxane is less than the lower limit, oil bleed is likely to occur when it becomes a silicone composition. Furthermore, when the kinematic viscosity is more than the upper limit, there is a risk that the silicone composition will have poor extensibility. Note that in the present invention, the kinematic viscosity of the organopolysiloxane is the value at 25°C as measured using an Ostwald viscometer.

In the present invention, the organopolysiloxane may be any organopolysiloxane having the above-mentioned kinematic viscosity and containing one or more aliphatic unsaturated groups per molecule, and a known organopolysiloxane may be used. The molecular structure of the organopolysiloxane is not particularly limited and may be linear, branched, cyclic, or the like. In particular, it is preferable that the organopolysiloxane has a linear structure where the main chain consists of repeating diorganosiloxane units, with both ends of the molecular chain being capped with triorganosiloxy groups. The organopolysiloxane may be used alone or in combination of two or more.

The organopolysiloxane can be represented by the following average composition formula (1):

R¹ₐSiO_{(4-a)/2} (1)

wherein R¹ is each independently a saturated or unsaturated, unsubstituted or substituted monovalent hydrocarbon group having 1 to 18, preferably 1 to 14, carbon atoms. Examples of the monovalent hydrocarbon group include an alkyl group such as a methyl group, an ethyl group, a propyl group, a hexyl group, an octyl group, a decyl group, a dodecyl group, a tetradecyl group, a hexadecyl group, or an octadecyl group; a cycloalkyl group such as a cyclopentyl group or a cyclohexyl group; an alkenyl group such as a vinyl group or an allyl group; an aryl group such as a phenyl group or a tolyl group; an aralkyl group such as a 2-phenylethyl group or a 2-methyl-2-phenylethyl group; or those in which some or all of the hydrogen atoms are replaced with a halogen atom such as fluorine, bromine, and chlorine, a cyano group, or the like, for example, a 3,3,3-trifluoropropyl group, a 2-(perfluorobutyl)ethyl group, a 2-(perfluorooctyl)ethyl group, or a p-chlorophenyl group.

In the formula (1), "a" is the number in the range of 1.8 to 2.2, particularly in the range of 1.9 to 2.1. When "a" is in the above range, the resulting silicone composition can have a good viscosity.

The organopolysiloxane represented by the average composition formula (1) is preferably a linear organopolysiloxane represented by the following formula (2): 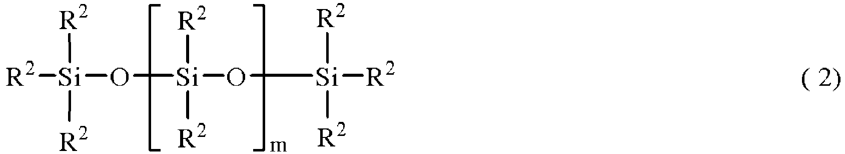 wherein R² is each independently a saturated or unsaturated, unsubstituted or substituted monovalent hydrocarbon group having 1 to 18, preferably 1 to 14, carbon atoms. Examples of the monovalent hydrocarbon group include the groups described above. Furthermore, it is preferable that at least one R² is a vinyl group. The number of carbon atoms in R² is the number such that the kinematic viscosity of the organopolysiloxane at 25°C is 10 to 100,000 mm²/s, preferably 30 to 10,000 mm²/s, and more preferably 100 to 8,000 mm²/s.

### Component (B)

The component (B) is a polyorganohydrogensiloxane having one or more silicon atom-bonded hydrogen atoms in one molecule, and having at least one group of an acrylate group and a methacrylate group. The component (B) may be used alone or in combination of two or more. The organohydrogenpolysiloxane is required to have on average at least one silicon atom-bonded hydrogen atom (a SiH group) per molecule in the molecule, because it undergoes an addition reaction with an aliphatic unsaturated hydrocarbon group in the composition in the presence of a platinum group metal catalyst described later to form a cross-linked structure. Also, the upper limit of the number of hydrogen atoms is not particularly limited, but preferably 5 or less, and more preferably 3 or less. Additionally, the at least one group of an acrylate group and a methacrylate group is required to be present on average at least one per molecule. Also, the upper limit of the number of the at least one group of an acrylate group and a methacrylate group is not particularly limited, but preferably 5 or less, more preferably 3 or less, and further preferably 1. Note that the at least one group may be multiple acrylate groups only, or may be multiple methacrylate groups only. The molecular structure of the component (B) is not particularly limited, and may be, for example, either linear, branched, or cyclic, and it is possible to use the component (B) represented by the following average composition formula: 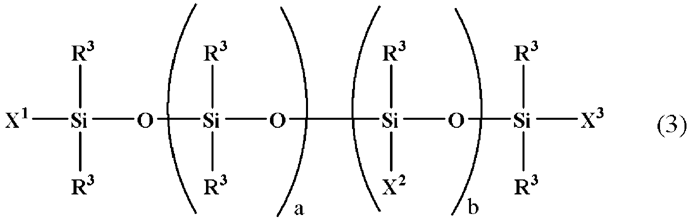 wherein R³ is an unsubstituted or substituted monovalent hydrocarbon group, or a hydrogen atom. R³ may be different from one another, provided that at least one R³ is a hydrogen atom. Examples of the monovalent hydrocarbon group include an alkyl group such as a methyl group, an ethyl group, a propyl group, a hexyl group, an octyl group, a decyl group, a dodecyl group, a tetradecyl group, a hexadecyl group, or octadecyl group; a cycloalkyl group such as a cyclopentyl group or a cyclohexyl group; an alkenyl group such as a vinyl group or an allyl group; an aryl group such as a phenyl group or a tolyl group; an aralkyl group such as a 2-phenylethyl group or a 2-methyl-2-phenylethyl group; or those in which some or all of the hydrogen atoms are replaced with a halogen atom such as fluorine, bromine, and chlorine, a cyano group, or the like, for example, a 3,3,3-trifluoropropyl group, a 2-(perfluorobutyl)ethyl group, a 2-(perfluorooctyl)ethyl group, and a p-chlorophenyl group.

X¹, X², and X³ may be the same or different, and each represent a group represented by R¹ or -(CH₂)ₙ-O(=O)C-CR⁴=CH₂, provided that at least one of them is - (CH₂)ₙ-O(=O)C-CR⁴=CH₂. R⁴ is a hydrogen atom or a methyl group. "n" is an integer of 1 to 10, preferably an integer of 1 to 5, and more preferably an integer of 2 to 4.

"a" and "b" are each 1 ≤ a ≤ 1,000, 0 ≤ b ≤ 1,000, more preferably 1 ≤ a ≤ 100, 0 ≤ b ≤ 100, and further preferably 1 ≤ a ≤ 50, 0 ≤ b ≤ 50.

Examples of the component (B) can include the following:
B-1: organohydrogenpolysiloxane represented by the following formula (siloxane amount: 0.0038 mol/g); 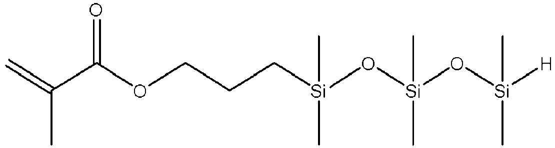
B-2: organohydrogenpolysiloxane represented by the following formula (siloxane amount: 0.0055 mol/g); and 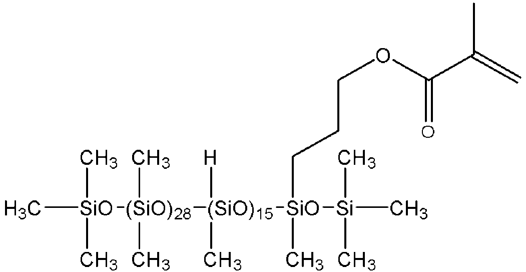
B-3: organohydrogenpolysiloxane represented by the following formula (siloxane amount: 0.0011 mol/g).

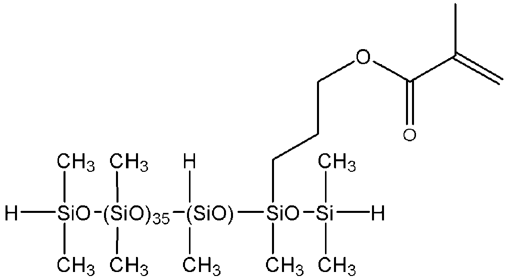

The component (B) is in such an amount that the number of the silicon atom-bonded hydrogen atoms in the component (B) divided by the number of the aliphatic unsaturated groups in the component (A) is 0.1 to 3.0, preferably 0.2 to 2.5. When the number of the silicon atom-bonded hydrogen atoms in the component (B) divided by the number of the aliphatic unsaturated groups in the component (A) is less than 0.1, the curability is insufficient, and when it is more than 3.0, the curability is also not improved, thus making it uneconomical.

### Component (C)

The component (C) is a thermoconductive filler. The component (C) is a thermoconductive filler with a thermal conductivity of 10 W/m·K or more. As the thermoconductive filler of the component (C), those with a thermal conductivity of 10 W/m·K or more, preferably 15 W/m·K or more, are used. This is because, when the thermal conductivity of the filler is less than 10 W/m·K, the thermal conductivity of the thermoconductive silicone composition itself will be reduced. The upper limit of the thermal conductivity is not particularly limited, but it can be set to 420 W/m·K or less because the thermal conductivity of silver powder, which exhibits the highest thermal conductivity among the compounds commonly used as thermoconductive fillers, is 420 W/m·K. Examples of such a thermoconductive filler include aluminum powder, copper powder, silver powder, iron powder, nickel powder, gold powder, tin powder, metallic silicon powder, aluminum nitride powder, boron nitride powder, alumina powder, diamond powder, carbon powder, indium powder, gallium powder, and zinc oxide powder. Thermoconductive filler may be any filler having a thermal conductivity of 10 W/m·K or more, and it may be used alone or in a mixture of two or more. The average particle size of the component (C) is preferably in the range of 0.1 to 150 µm, and more preferably in the range of 0.1 to 120 µm. When the average particle size is 0.1 µm or more, the resulting composition has a grease-like texture and good extensibility, and when the average particle size is 150 µm or less, the thermal resistance of the heat-dissipating grease does not become excessive and the performance is good. Note that, in the present invention, the average particle size can be measured using a Microtrack MT330OEX manufactured by Nikkiso Co., Ltd., and it is a volume-based volume average diameter. The shape of the component (C) may be amorphous, spherical, or any other shape. The amount of the thermoconductive filler is 20 to 95% by mass, more preferably 50 to 95% by mass, and further preferably 80 to 95% by mass, based on the total amount of the composition. When the amount exceeds 95% by mass, the composition may become non-uniform, and when the amount is less than 20% by mass, the heat dissipation may be insufficient.

### Component (D)

The component (D) is a platinum group metal catalyst and functions to promote the aforementioned addition reaction. As the platinum group metal catalyst, known ones that are used in addition reaction can be used. Examples of the catalyst include platinum-based, palladium-based, and rhodium-based catalysts, but platinum or platinum compounds, which are relatively easier to obtain, are preferable. Examples of the platinum or platinum compounds include elemental platinum, platinum black, chloroplatinic acid, a platinum-olefin complex, a platinum-alcohol complex, and a platinum coordination compound. The platinum-based catalyst may be used alone or in combination of two or more. The amount of the component (D) blended may be any effective amount as a catalyst, that is, an effective amount necessary to promote the addition reaction and cure the composition of the present invention. Specifically, the amount of the component (D), in terms of the mass of platinum group metal atoms, is 0.1 to 500 ppm, and more preferably 1 to 200 ppm, based on the component (A). When the amount of the catalyst is at or above the lower limit, the effect as a catalyst can be obtained. When the amount of the catalyst is at or below the upper limit, the catalytic effect is achieved economically, thus making it preferable.

### Component (E)

The component (E) is a radical initiator that generates radicals through heat and is an essential component for thermally radical curing the polyorganosiloxane obtained by cross-linking the component (A) and the component (B). The component (E) is not particularly limited as long as it is an organic peroxide, and examples include an organic peroxide such as dicumyl peroxide, 1,1-bis(t-butylperoxy)-3,3,5-trimethylcyclohexane, di-t-butyl peroxide, 2,5-di(t-butylperoxy)-2,5-dimethylhexane, 1,1-bis(t-amylperoxy)cyclohexane, 2,2-bis(t-butylperoxy)butane, 2,4-pentanedione peroxide, 2,5-bis(t-butylperoxy)-2,5-dimethylhexane, 2,5-di(t-butylperoxy)-2,5-dimethyl-3-hexyne, 2-butanone peroxide, benzoyl peroxide, cumene hydroperoxide, lauroyl peroxide, t-butyl hydroperoxide, t-butyl peroxybenzoate, t-butyl peroxy-2-ethylhexyl carbonate, di(2,4-dichlorobenzoyl)peroxide, dichlorobenzoyl peroxide, di(t-butyl peroxyisopropyl)benzene, di(4-methylbenzoyl)peroxide, di(2-methylbenzoyl)peroxide, butyl-4,4-di(t-butyl peroxy)valerate, 3,3,5,7,7-pentamethyl-1,2,4-trioxepane, t-butyl cumyl peroxide, di(4-t-butylcyclohexyl)peroxydicarbonate, dicetyl peroxydicarbonate, 2,3-dimethyl-2,3-diphenylbutane, dioctanoyl peroxide, t-butyl peroxy-2-ethylhexyl carbonate, t-amyl peroxy-2-ethylhexanoate, and 1,6-hexanediol-bis-t-butyl peroxycarbonate, and combinations thereof. Additionally, the organic peroxide may be used in a diluted form with a solvent or the like to improve handling properties, but it is preferable that the 1-minute half-life after dilution be 50°C or higher and 180°C or lower, more preferably 70°C or higher and 160°C or lower, and further preferably 90°C or higher and 140°C or lower. When the 1-minute half-life is 50°C or higher, the storability becomes good, while when the 1-minute half-life is 180°C or lower, the curability becomes good. Preferred examples of such peroxides include NYPER BMT manufactured by NOF Corporation (1-minute half-life: 131.1°C), PEROYL TCP manufactured by NOF Corporation (1-minute half-life: 92.1°C), and PARHEXA C manufactured by NOF Corporation (1-minute half-life: 153.8°C). The content of the component (E) is 1 to 10 parts by mass, and more preferably 3 to 7 parts by mass based on 100 parts by mass of the component (A). When the content of the component (E) is less than 1 part by mass, curing becomes insufficient, and when the content is more than 10 parts by mass, the curability is also not improved, thus making it uneconomical.

### Component (F)

The component (F) is an organic compound having one or more allyl groups. Suitable organic compounds as the component (F) are not limited, but examples include allyl methacrylate, allyl acrylate, diallyl maleate, and mixtures thereof. The content of the component (F) is preferably 0.01 to 10 parts by mass, and more preferably 2 to 5 parts by mass, based on 100 parts by mass of the component (A). When the content of the component (F) is 0.01 parts by mass or more, the surface treatment of the substrate surface becomes sufficient and good adhesion is achieved, and when the content is 10 parts by mass or less, the silicone composition has good mechanical properties.

### Component (G)

The component (G) is an organic compound having a trialkoxysilyl group. The adhesive performance of the composition can be improved by containing the component (G). Suitable examples of such an organic compound include, but are not limited to, an organotrialkoxysilane such as methyltrimethoxysilane, methyltriethoxysilane, vinyltrimethoxysilane, vinyltriethoxysilane, phenyltrimethoxysilane, phenyltriethoxysilane, ethyltrimethoxysilane, ethyltriethoxysilane, n-propyltrimethoxysilane, n-propyltriethoxysilane, n-butyltrimethoxysilane, n-butyltriethoxysilane, isobutyltrimethoxysilane, n-hexyltrimethoxysilane, and n-decyltrimethoxysilane. Due to the excellent adhesive properties of the present composition through thermal radical curing, 3-methacryloxypropyltrimethoxysilane, 3-glycidoxypropyltrimethoxysilane, 7-octenyltrimethoxysilane, and the like, are preferred. The component (G) may be used alone or in combination of two or more. The content of the component (G) is preferably 0.1 to 10 parts by mass, and more preferably 0.5 to 4.0 parts by mass, based on 100 parts by mass of the component (A). When the content of the component (G) is 0.1 parts by mass or more, the surface treatment of the substrate surface by alkoxysilane becomes sufficient and good adhesion is achieved, and when the content is 10 parts by mass or less, the silicone composition has good mechanical properties.

### Component (H)

The component (H) is used as a condensation reaction catalyst that promotes curing through moisture. Examples include a Lewis acid, a primary, secondary, or tertiary organic amine compound, a metal oxide, an organic titanium compound, an organic tin compound, an organic zirconium compound, or an organic carboxylate of a metal such as iron, antimony, bismuth, or manganese. The component (H) may be used alone or in a mixture of two or more.

Specific examples of the condensation reaction catalyst include dibutyltin dilaurate, dibutyltin dioctoate, dioctyltin dilaurate, dibutyltin maleate ester, dimethyltin dineodecanoate, dibutyltin dimethoxide, dioctyltin dineodecanoate, stannous octoate, tetrabutyltitanate, tetra-(2-ethylhexyl) titanate, diisopropoxybis(acetylacetonate)titanium, diisopropoxybis(ethyl acetoacetate)titanium, and tetramethylguanidylpropyltrimethoxysilane and salts thereof. Since the curing properties of the present composition through condensation curing are excellent, it is preferable to add an organotin compound or an organotitanium compound. Among these, it is preferable to add an organotitanium compound, particularly tetra-(2-ethylhexyl)titanate, diisopropoxy bis(acetylacetonate)titanium, or diisopropoxy bis(ethyl acetoacetate)titanium. The amount of the component (H) added is preferably 0.01 to 10% by mass, more preferably 0.05 to 7% by mass, and particularly preferably 0.1 to 1% by mass, based on a total amount of the composition. When the amount is 0.01% by mass or more, sufficient cross-linking properties due to condensation curing can be achieved. When the amount is 10% by mass or less, it is cost-effective and the curing speed does not be reduced, thus making it preferable.

### Other components

The silicone composition of the present invention may contain (I) a reaction control agent. The component (I) is a control agent that suppresses the progress of the hydrosilylation reaction at room temperature, and functions to extend the pot life during the production of the composition. As the reaction control agent, a known reaction control agent that is used in addition-curable silicone compositions can be used. Examples include acetylene compounds such as acetylene alcohols, e.g., ethynyl methyl decyl carbinol, 1-ethynyl-1-cyclohexanol, and 3,5-dimethyl-1-hexyn-3-ol, various nitrogen compounds such as tributylamine, tetramethylethylenediamine, and benzotriazole, organophosphorus compounds such as triphenylphosphine, oxime compounds, and organic chlorinated compounds. To adjust the viscosity of the composition, the composition may contain a non-reactive organo(poly)siloxane such as methylpolysiloxane. Furthermore, to prevent the degradation of the silicone composition, the composition may contain a known antioxidant such as 2,6-di-t-butyl-4-methylphenol, as needed. Furthermore, the composition may contain a dye, a pigment, a flame retardant, an anti-settling agent, or a thixotropy enhancer, as needed.

Hereinafter, the method for producing the silicone composition of the present invention will be described, but is not limited thereto.

### Steps for preparing silicone composition

The method for producing the silicone composition of the present invention is not particularly limited, and may follow conventional methods for producing a silicone grease composition. For example, the composition can be produced by the method including mixing the aforementioned components (A) to (H), and other components as needed, using a mixing machine such as Trimix, Twinmix, Planetary Mixer (all registered trademarks of mixing machines manufactured by INOUE MFG., INC.), Ultra Mixer (registered trademark of a mixing machine manufactured by Mizuho Industrial Co., Ltd.), or HIVIS DISPER MIX (registered trademark of a mixing machine manufactured by Tokushu Kika Kogyo Co., Ltd.). The component (A) and the component (B) can be sufficiently cross-linked through a hydrosilylation reaction by stirring the components (A), (B), (C), and (D) at a temperature of 100°C or higher, preferably 110°C, and more preferably 120°C for 30 minutes or more, allowing the thermoconductive silicone composition to achieve an appropriate viscosity. Note that there is no particular upper limits to the temperature and time for heating and mixing. For example, the temperature can be set to 160°C or lower, and the time can be within 5 hours. The silicone composition of the present invention is optimal as a thermoconductive silicone composition because it has high thermal conductivity. Note that the method for measuring thermal conductivity is the method described in the examples below.

In addition, the silicone composition can be produced by the method including heating and mixing the component (A), the component (B), the component (C), and the component (D) at 100°C or higher for 30 minutes or more, followed by cooling; and then adding the component (E). At this time, it is also possible to produce the thermal radical curable thermoconductive silicone composition by the method including heating and mixing the component (A), the component (B), the component (C), the component (D), the component (G), and the component (I) at 100°C or higher for 30 minutes or more, followed by cooling; and then adding the component (E), the component (F), and the component (H).

The silicone composition of the present invention is optimal as a thermoconductive silicone composition because it exhibits excellent curability.

### EXAMPLE

Hereinafter, the present invention will be more specifically described using the Examples and Comparative Examples, but the present invention is not limited to the following Examples. The kinematic viscosity mentioned below is the value measured at 25°C using an Ubbelohde-type Ostwald Viscometer (manufactured by SIBATA Scientific Technology Ltd.).

### Component (A)

A-1: Dimethylpolysiloxane capped at both ends with dimethylvinylsilyl groups, having a kinematic viscosity at 25°C of 600 mm²/s (vinyl group content: 0.015 mol/100 g)
A-2: Dimethylpolysiloxane capped at both ends with dimethylvinylsilyl groups, having a kinematic viscosity at 25°C of 100,000 mm²/s (vinyl group content: 0.005 mol/100 g)

### Component (B)

B-1: Organohydrogenpolysiloxane represented by the following formula (hydrogen group content: 0.0038 mol/g)

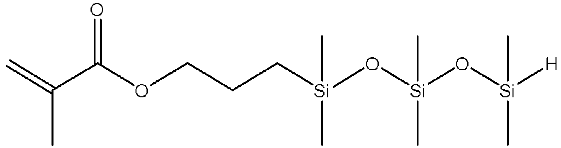

B-2: Organohydrogenpolysiloxane represented by the following formula (hydrogen group content: 0.0051 mol/g)

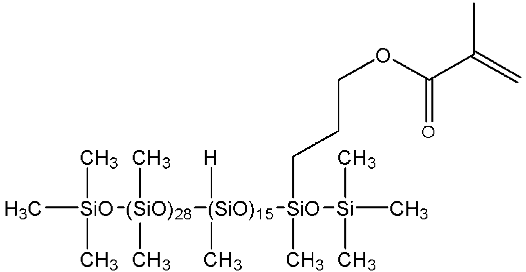

B-3: Organohydrogenpolysiloxane represented by the following formula (hydrogen group content: 0.0011 mol/g)

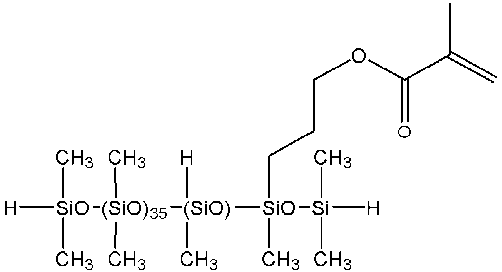

b-4: Organohydrogenpolysiloxane represented by the following formula (hydrogen group content: 0.0054 mol/g)

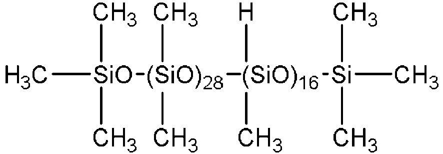

### Component (C)

C-1: Spherical aluminum oxide having D50 of 10.0 µm (thermal conductivity: 33.4 W/m·K)
C-2: Amorphous aluminum oxide having D50 of 1.2 µm (thermal conductivity: 21.8 W/m·K)
C-3: Amorphous aluminum nitride having D50 of 20.2 µm (thermal conductivity: 180.7 W/m·K)

### Component (D)

D-1: Solution of a platinum-divinyltetramethyldisiloxane complex in the same dimethylpolysiloxane as A-1 (platinum atom content: 1% by mass)

### Component (E)

E-1: Solution of benzoyl peroxide in xylene (active ingredient 40%), manufactured by NOF Corporation, Product Name: NYPER BMT, 1-minute half-life: 131.1°C
E-2: Bis(4-tert-butylcyclohexan-1-yl)peroxydicarbonate (active ingredient ≥90%), Product Name: PEROYL TCP manufactured by NOF Corporation, 1-minute half-life: 92.1°C

### Component (F)

F-1: Allyl methacrylate
F-2: Diallyl maleate

### Component (G)

G-1: 3-Methacryloxypropyltrimethoxysilane
G-2: 7-Octenyltrimethoxysilane

### Component (H)

H-1: Diisopropoxybis(ethyl acetoacetate) titanium

### Component (I)

I-1: Ethynyl cyclohexanol

### [Examples 1 to 13 and Comparative Examples 1 to 2]

### (Preparation of Silicone Composition)

The above components (A) to (G) were blended according to the blended amounts shown in Tables 1 and 2 below and the method shown below to prepare a silicone composition. The components (A) to (D), (G), and (I) were added to a 5-liter planetary mixer (manufactured by INOUE MFG., INC.) and mixed at 120°C for 2 hours. Afterward, the mixture was cooled to 30°C or lower, and then the components (E), (F), and (H) were added to the mixture to prepare a silicone composition. For each composition obtained by the above method, viscosity, thermal conductivity, hardness, shear adhesion (elongation), and surface curability were measured according to the following method. The results are shown in Tables 1 and 2.

### [Comparative Examples 3 to 5]

### (Preparation of Silicone Composition)

The above components (A), (C), and (G) were mixed at 120°C for 2 hours according to the blended amounts shown in Table 3 below. Afterward, the mixture was cooled to 30°C or lower, and then the components (B), (D), (E), (F), (H), and (I) were added to the mixture to prepare a silicone composition. For each composition obtained by the above method, viscosity, thermal conductivity, hardness, shear adhesion (elongation), and surface curability were measured according to the following method. The results are shown in Table 3.

### [Measurement of Viscosity]

The viscosity of the silicone composition is a value measured at 25°C using a spiral viscometer (Type PC-1T) manufactured by Malcom Co., Ltd. (with rotor A at 10 rpm, shear rate 6 [1/s]).

### [Measurement of Thermal Conductivity]

The thermal conductivity of each composition, wrapped in kitchen plastic film and shaped like a pouch, was measured using TPA-501 manufactured by Kyoto Electronics Manufacturing Co., Ltd.

### [Measurement of Hardness]

Each composition was heated at 100°C for 15 minutes, cured to produce a 6 mm-sheet, and measured using a Shore A durometer.

### [Measurement of Shear Adhesion]

Each composition was sandwiched between two aluminum plates with a thickness of 1 mm × 25 mm × 2 mm, then heated and cured at 100°C for 15 minutes. The stress at failure was measured.

### [Evaluation of Surface Curability]

20 g of the composition was placed into an aluminum petri dish with a diameter of 60 mm, heated at 100°C for 15 minutes, then removed, and surface curing was evaluated 24 hours later. No observation of tack was marked as "Good".

**[Table 1]**

| | Example 1 | Example 2 | Example 3 | Example 4 | Example 5 | Comparative Example 1 | Example 6 | Example 7 | Example 8 | Example 9 | Comparative Example 2 | Example 10 |
|---|---|---|---|---|---|---|---|---|---|---|---|---|
| A-1 | 100 | 100 | 100 | 50 | 100 | 100 | 100 | 100 | 100 | 100 | 100 | 100 |
| A-2 | 0 | 0 | 0 | 50 | 0 | 0 | 0 | 0 | 0 | 0 | 0 | 0 |
| B-1 | 5 | 9 | 2.5 | 1.5 | 0 | 0 | 5 | 5 | 5 | 5 | 5 | 5 |
| B-2 | 0 | 0 | 0 | 0 | 0.65 | 0 | 0 | 0 | 0 | 0 | 0 | 0 |
| B-3 | 0 | 0 | 0 | 0 | 0 | 0 | 0 | 0 | 0 | 0 | 0 | 0 |
| b-4 | 0 | 0 | 0 | 0 | 0 | 0.6 | 0 | 0 | 0 | 0 | 0 | 0 |
| C-1 | 443 | 443 | 443 | 443 | 443 | 443 | 443 | 443 | 443 | 443 | 443 | 443 |
| C-2 | 312 | 312 | 312 | 312 | 312 | 312 | 312 | 312 | 312 | 312 | 312 | 312 |
| C-3 | 0 | 0 | 0 | 0 | 0 | 0 | 0 | 0 | 0 | 0 | 0 | 0 |
| C content (%) | 86.5% | 86.1% | 86.7% | 86.8% | 86.9% | 86.9% | 86.5% | 86.5% | 86.5% | 86.6% | 87.1% | 86.9% |
| D-1 | 0.2 | 0.2 | 0.2 | 0.2 | 0.2 | 0.2 | 0.2 | 0.2 | 0.2 | 0.2 | 0.2 | 0.2 |
| E-1 | 6 | 6 | 6 | 6 | 6 | 6 | 0 | 6 | 6 | 6 | 0 | 1.5 |
| E-2 | 0 | 0 | 0 | 0 | 0 | 0 | 6 | 0 | 0 | 0 | 0 | 0 |
| F-1 | 3 | 3 | 3 | 3 | 3 | 3 | 3 | 0 | 0 | 3 | 3 | 3 |
| F-2 | 0 | 0 | 0 | 0 | 0 | 0 | 0 | 3 | 3 | 0 | 0 | 0 |
| G-1 | 3 | 3 | 3 | 3 | 3 | 3 | 3 | 3 | 0 | 3 | 3 | 3 |
| G-2 | 0 | 0 | 0 | 0 | 0 | 0 | 0 | 0 | 3 | 0 | 0 | 0 |
| H-1 | 0.6 | 0.6 | 0.6 | 0.6 | 0.6 | 0.6 | 0.6 | 0.6 | 0.6 | 0 | 0.6 | 0.6 |
| I-1 | 0.05 | 0.05 | 0.05 | 0.05 | 0.05 | 0.05 | 0.05 | 0.05 | 0.05 | 0.05 | 0.05 | 0.05 |
| Number of silicon atom-bonded hydrogen atoms in component (B)/number of unsaturated groups in component (A) | 1.27 | 2.28 | 0.63 | 0.57 | 0.22 | 0.22 | 1.27 | 1.27 | 1.27 | 1.27 | 1.27 | 1.27 |
| Viscosity (Pa·s) | 160 | 300 | 154 | 164 | 360 | 400 | 158 | 160 | 160 | 126 | 180 | 170 |
| Thermal conductivity (W/mK) | 2.0 | 2.0 | 2.0 | 2.0 | 2.0 | 2.0 | 2.0 | 2.0 | 2.0 | 2.0 | 2.0 | 2.2 |
| Hardness | 90 | 87 | 78 | 78 | 20 | 5 | 90 | 90 | 90 | 90 | Not cured | 64 |
| Shear adhesion (MPa) | 2.7 | 2.4 | 1.4 | 2.0 | 0.8 | 0.05 | 3.0 | 3.2 | 2.4 | 2.7 | | 1.2 |
| Surface curability | Good | Good | Good | Good | Good | Good | Good | Good | Good | Poor | Poor | Good |

**[Table 2]**

| | Example 11 | Example 12 | Example 13 |
|---|---|---|---|
| A-1 | 100 | 100 | 90 |
| A-2 | 0 | 0 | 0 |
| B-1 | 5 | 0 | 5 |
| B-2 | 0 | 0 | 0 |
| B-3 | 0 | 3.5 | 0 |
| b-4 | 0 | 0 | 0 |
| C-1 | 443 | 443 | 0 |
| C-2 | 312 | 312 | 800 |
| C-3 | 0 | 0 | 1200 |
| C content (%) | 86.2% | 86.5% | 94.7% |
| D-1 | 0.2 | 0.2 | 0.2 |
| E-1 | 9 | 6 | 3 |
| E-2 | 0 | 0 | 0 |
| F-1 | 3 | 3 | 3 |
| F-2 | 0 | 0 | 0 |
| G-1 | 3 | 3 | 0 |
| G-2 | 0 | 0 | 10 |
| H-1 | 0.6 | 0.6 | 0.6 |
| I-1 | 0.05 | 0.05 | 0.05 |
| Number of silicon atom-bonded hydrogen atoms in component (B)/number of unsaturated groups in component (A) | 1.27 | 0.24 | 1.42 |
| Viscosity (Pa·s) | 150 | 260 | 540 |
| Thermal conductivity (W/mK) | 1.5 | 1.7 | 7.0 |
| Hardness | 90 | 20 | 97 |
| Shear adhesion (MPa) | 3.5 | 1.5 | 0.6 |
| Surface curability | Good | Good | Good |

**[Table 3]**

| | Comparative Example 3 | Comparative Example 4 | Comparative Example 5 |
|---|---|---|---|
| A-1 | 100 | 100 | 100 |
| A-2 | 0 | 0 | 0 |
| B-1 | 5 | 0 | 0 |
| b-4 | 0 | 2.8 | 2.8 |
| C-1 | 443 | 443 | 443 |
| C-2 | 312 | 312 | 312 |
| C content (%) | 86.5% | 87.6% | 87.0% |
| D-1 | 0.2 | 0.2 | 0.2 |
| E-1 | 6 | 0 | 6 |
| E-2 | 0 | 0 | 0 |
| F-1 | 3 | 0 | 0 |
| F-2 | 0 | 0 | 0 |
| G-1 | 3 | 3 | 3 |
| G-2 | 0 | 0 | 0 |
| H-1 | 0.6 | 0.6 | 0.6 |
| I-1 | 0.05 | 0.3 | 0.3 |
| Number of silicon atom-bonded hydrogen atoms in component (B)/number of unsaturated groups in component (A) | 1.27 | 1.01 | 1.01 |
| Viscosity (Pa·s) | 90 | 80 | 80 |
| Thermal conductivity (W/mK) | 2.0 | 2.0 | 2.0 |
| Hardness | 10 | 5 | 7 |
| Shear adhesion (MPa) | 0.2 | 0.1 | 0.1 |
| Surface curability | Good | Good | Good |

As shown in Tables 1 and 2, the silicone compositions of Examples 1 to 13, which meet the requirements of the present invention, exhibit excellent heat-dissipating adhesiveness with a curing time of 15 minutes at 100°C. Furthermore, when comparing Examples 1 to 8 and 10 to 13 containing the component (H-1) with Example 9 which does not contain the component, it is found that the addition of the optional component, a condensation catalyst, results in not only excellent heat-dissipating adhesiveness but also superior surface curability. On the other hand, as shown in Tables 1 and 3, the compositions in Comparative Examples 1 to 5, which do not meet the requirements of the present invention, are not sufficiently cured and lack adhesiveness. In Comparative Example 2, the composition is not cured, and for cured ones in other Comparative Examples, the hardness is low, and the shear adhesion values are low. Accordingly, the present invention enables the provision of a thermal radical curable thermoconductive silicone composition that has excellent curability through low-temperature and short-time heating and exhibits superior heat-dissipating adhesiveness.

The present description includes the following inventions.
[1]: A thermal radical curable thermoconductive silicone composition comprising: an addition reaction product of the following component (A) and component (B); (C) a thermoconductive filler having a thermal conductivity of 10 W/m·K or more in an amount of 20 to 95% by mass based on a total amount of the composition; (D) a platinum group metal catalyst; and (E) an organic peroxide in an amount of 1 to 10 parts by mass based on 100 parts by mass of the component (A), wherein the component (A) is an organopolysiloxane having a kinematic viscosity at 25°C of 10 to 100,000 mm²/s and containing one or more aliphatic unsaturated groups per molecule, the component (B) is a polyorganohydrogensiloxane having one or more silicon atom-bonded hydrogen atoms in one molecule, and having at least one group of an acrylate group and a methacrylate group, and the number of the silicon atom-bonded hydrogen atoms in the component (B) divided by the number of the aliphatic unsaturated groups in the component (A) is 0.1 to 3.0.
[2] The thermal radical curable thermoconductive silicone composition according to [1], further comprising (F) an organic compound having one or more allyl groups.
[3] The thermal radical curable thermoconductive silicone composition according to [1] or [2], further comprising (G) an organic compound having a trialkoxysilyl group.
[4] The thermal radical curable thermoconductive silicone composition according to any one of [1] to [3], further comprising (H) a condensation catalyst.
[5] A method for producing the thermal radical curable thermoconductive silicone composition according to [1], the method comprising: heating and mixing the component (A), the component (B), the component (C), and the component (D) at 100°C or higher for 30 minutes or more, followed by cooling; and then adding the component (E).
[6] The method for producing the thermal radical curable thermoconductive silicone composition according to [5], the method comprising: heating and mixing the component (A), the component (B), the component (C), the component (D), and (G) an organic compound having a trialkoxysilyl group, and (I) a reaction control agent at 100°C or higher for 30 minutes or more, followed by cooling; and then adding the component (E), and (F) an organic compound having one or more allyl groups, and (H) a condensation catalyst.

It should be noted that the present invention is not limited to the above-described embodiments. The embodiments are illustrative, and any examples that substantially have the same feature and demonstrate the same functions and effects as those in the technical concept described in claims of the present invention are included in the technical scope of the present invention.

## Claims

1. A thermal radical curable thermoconductive silicone composition comprising: an addition reaction product of the following component (A) and component (B); (C) a thermoconductive filler having a thermal conductivity of 10 W/m·K or more in an amount of 20 to 95% by mass based on a total amount of the composition; (D) a platinum group metal catalyst; and (E) an organic peroxide in an amount of 1 to 10 parts by mass based on 100 parts by mass of the component (A), wherein
the component (A) is an organopolysiloxane having a kinematic viscosity at 25°C of 10 to 100,000 mm²/s and containing one or more aliphatic unsaturated groups per molecule,
the component (B) is a polyorganohydrogensiloxane having one or more silicon atom-bonded hydrogen atoms in one molecule, and having at least one group of an acrylate group and a methacrylate group, and
the number of the silicon atom-bonded hydrogen atoms in the component (B) divided by the number of the aliphatic unsaturated groups in the component (A) is 0.1 to 3.0.

2. The thermal radical curable thermoconductive silicone composition according to claim 1, further comprising (F) an organic compound having one or more allyl groups.

3. The thermal radical curable thermoconductive silicone composition according to claim 1, further comprising (G) an organic compound having a trialkoxysilyl group.

4. The thermal radical curable thermoconductive silicone composition according to claim 1, further comprising (H) a condensation catalyst.

5. A method for producing the thermal radical curable thermoconductive silicone composition according to claim 1, the method comprising:
heating and mixing the component (A), the component (B), the component (C), and the component (D) at 100°C or higher for 30 minutes or more, followed by cooling; and then
adding the component (E).

6. The method for producing the thermal radical curable thermoconductive silicone composition according to claim 5, the method comprising:
heating and mixing the component (A), the component (B), the component (C), the component (D), and (G) an organic compound having a trialkoxysilyl group, and (I) a reaction control agent at 100°C or higher for 30 minutes or more, followed by cooling; and then
adding the component (E), and (F) an organic compound having one or more allyl groups, and (H) a condensation catalyst.
